# EUROPEAN PATENT APPLICATION

(11) **EP 4 656 338 A2**
(43) Date of publication of application: **03.12.2025**
(21) Application number: 25179853.4
(22) Date of filing: 30.05.2025
(51) Int. Cl.: B26D 1/00, B26D 1/28, B26D 3/11, B26D 7/00, B26D 7/06, F16J 15/16, F16J 15/447, B26D 5/00

(54) **HELICAL CUTTER AND LABYRINTH SEAL**

(30) Priority: 31.05.2024 US 202463654512 P
(71) Applicant: Vanmark Equipment, LLC, Creston, IA 50801 (US)
(72) Inventor: Lewer, Aaron, 50801 Creston (US); Laws, Andrew, 50801 Creston (US); Meek, Paul, 50801 Creston (US); Seidel, Colin, 83709 Boise (US)
(74) Representative: Götz, Gudrun Veronika

(57) **Abstract**

A cutting apparatus in which an alignment tube directs food into a helical blade drivingly linked to a spindle. Food forced through the alignment tube is projected into the blade and sliced. Tabs protrude upstream from the spindle and insert into grooves in the blade. Ports extend through the blade with opposing endwalls substantially parallel to one another and angled to the axis of rotation between about 30 and 60 degrees. The spindle is rotatably mounted in a housing with bearings disposed in a sealed chamber. The sealed chamber is protected by a labyrinth seal formed by opposing surfaces spaced from one another defining a path, where the path extends parallel to and away from the axis of rotation as the path extends axially away from the bearings. The alignment tube may have a downstream end that is configurable between an on-axis and an off-axis position.

## Description

### BACKGROUND OF THE INVENTION

It is well known that blades can be forcefully applied to food products to shape the food products into many different shapes. The most basic method of using a blade is to hand slice a product with a knife, such as in forming disk-shaped slices by cutting across the length of an elongated product, such as a carrot or cucumber. However, this process is not very fast, and it includes non-trivial risks to the person using the knife.

As an alternative, food products can be moved through a stationary blade by hand, such as with a mandoline slicer. Advances in food product cutting technologies have resulted in the hydraulically fed cutting system. The driving force used in this system is moving water, and thus the process is called "hydraulic cutting", which is referred to by the shorthand term "hydro-cutting" or "hydrocutting." Hydrocutting involves the propulsion of water and food products, typically at very high speed, through a path that includes a stationary cutting blade. In hydrocutting, the food product is sliced completely in one pass through the blade. See United States Patent No. 9,446,531 to Mathues, et al., which is incorporated herein by reference. In all of the above examples, the blades cut in a straight line through the food item, and the resulting products are typically elongated with straight sides.

In the vegetable and fruit cutting industry, food products are sliced along the longitudinal axis (e.g., French fries) and along the transverse axis (e.g., potato chips). Production cutting systems and related knife fixtures are generally well known in the art of hydrocutting vegetable products. Typical hydrocutting systems have a knife fixture that is mounted at a position along the path of the food product to slice parallel to the flow of water. Such parallel cutters usually cut or slice into strips or, with added motions, into a helical shape. In such a system, the food products are conveyed one-at-a-time in single file succession into the stationary cutting blades with enough kinetic energy to carry the product through the stationary knife fixture.

Hydraulic food cutters are used to cut a wide variety of food products, including potatoes, carrots, beets, zucchini, cucumbers, and others. Cutting potatoes has been the most common application of hydrocutting machines. However, hydraulic food cutters are capable of cutting, and are used to cut, a wide variety of food products.

The basic configuration of a prior art hydrocutting system includes a tank filled with water that is pumped through conduit into an alignment chute or tube. In the alignment tube potatoes are aligned and accelerated to high speed before impinging upon a fixed array of cutter blades where the potato is cut into a plurality of smaller pieces.

The tank filled with water, which is one of the components of a prior art hydraulic cutting apparatus for use in cutting potatoes, is referred to as a receiving tank. Peeled or unpeeled potatoes are dropped into the receiving tank and a food pump, typically a single impeller centrifugal pump, is provided to drive the potatoes through the system. The pump draws water from the receiving tank and pumps the water and the suspended potatoes from the tank into the accelerator tube, which functions as the converging portion of a venturi. The accelerator tube is used to accelerate, singulate, and align the potatoes immediately prior to impinging upon the stationary knife blades of the cutter blade assembly.

The use of an accelerator tube is required in order to perform at least three functions. First, the accelerator tube accelerates the water and food product to the velocity required in order for it to pass cleanly through the knife blade assembly. In the case of potatoes, a common velocity range is from about 40 to about 60 feet per second. Second, the accelerator tube aligns and centers the food products prior to impingement upon the knife blade assembly. Third, the acceleration of the product causes multiple products to separate while aligning them, thereby causing them to enter the cutter in a single file line (singulate).

Potatoes can be cut into French fry sticks as one example of the use of hydrocutting systems, and potatoes may be used as an example hereafter. A person of ordinary skill will understand, after reading the description herein, how to adapt the apparatus described herein to other food products. Each whole potato impinging upon the knife blade assembly at high speed passes through the cutting blade array and is thereby cut into a plurality of food pieces, for example French fry pieces. The cross section of each of the food strips is determined by the arrangement of the cutter head knives.

A portion of the hydrocutting system separates the food product strips from the water once the strips are past the cutter head. It is desirable to slow down the water column and the food product strips within it in a controlled manner before this separation portion is encountered. This is because the strips may be fragile (depending on the food product) and gentle handling in the sections following cutting prevents breakage of, or stress on, the strips that would render the strips less desirable. The food strip pieces thus pass with the water into the second half of the venturi which is a diverging tube in which the water and the cut food pieces are decelerated back to a slower velocity. The water and cut food pieces are then deposited onto a dewatering conveyer. The water passes through the dewatering conveyor and is collected and recycled back to the receiving tank. The cut food pieces remain on the conveyor and are carried off for further processing.

As noted above, the water and the food product are pumped through a decreasing diameter accelerating section conduit in order to increase the speed of the food products and water as they approach the blade. Unless otherwise specified, the term "acceleration" and its derivatives are used herein to denote both positive and negative (increasing and decreasing) changes of velocity per unit time. While the water and food products increase in speed through the accelerating section, the individual items in the stream also orient and align for cutting as they pass through the cutter head. The accelerating section also singulates the food products, meaning the food products travelling through conduit laterally beside one another are arranged in a "single file" line before each item passes through the cutter head.

It is also known to slice a food product with a moving blade. In such systems, the food product moves along a substantially straight line and the blade rotates about the food product, relative to the line. An example of this is shown in United States Patent No. 4,644,838 to Samson et al., which is incorporated herein by reference. Such systems have weaknesses that can be improved.

Conventional helical cutting systems have bearings that are sealed from the environment and the water flow using traditional carbon mechanical seals. Alternative labyrinth seals have traditionally used exotic and/or low friction materials to ensure a usably long life.

### SUMMARY OF THE INVENTION

Described herein is a new helical cutting system for cutting food products. The new system has various features not found in the prior art and which are improvements.

Disclosed herein is a cutting apparatus in which a food product and water are forced in a downstream direction through an alignment tube into a blade. The cutting apparatus comprises a rotatable spindle having a central passage defined by a sidewall. The alignment tube is disposed upstream of an upstream end of the spindle. A helical blade having an axis of rotation is drivingly linked to the spindle between the spindle and the alignment tube. The spindle rotates the helical blade and food products forced through the alignment tube are projected into the rotating helical blade and sliced thereby.

In some embodiments, the blade is attached to an upstream end of the spindle. In some embodiments, at least one tab extends upstream from the upstream end of the spindle, and removably fastens to the blade. In some embodiments, a retainer with at least two tabs protruding upstream from an annulus is attached to an upstream end of the spindle. The tabs may insert into respective grooves formed in the blade to retain the blade and drivingly link thereto.

In some embodiments, the blade has a plurality of ports extending therethrough, each port having at least one endwall that is disposed substantially transverse to the axis of rotation. In some embodiments, opposing endwalls in the ports are substantially parallel to one another. In some embodiments, the endwalls are angled relative to the axis of rotation between about 30 and 60 degrees.

In some embodiments, the spindle is rotatably mounted in a housing with bearings disposed in a sealed chamber. The sealed chamber may be defined between an outer surface of the spindle and an inner surface of the housing. In this embodiment, axially opposed ends of the sealed chamber are formed by opposing surfaces spaced from one another defining a path, and the path only extends parallel to and away from the axis of rotation as the path extends axially away from the bearings.

In some embodiments, the alignment tube may have a downstream end that is configurable between a first position and a second position. In the first position food products forced through the alignment tube are projected into the rotating helical blade substantially aligned with the axis of rotation. In the second position, food products forced through the alignment tube are projected into the rotating helical blade substantially misaligned with the axis of rotation. In some embodiments, food products forced through the alignment tube in the second position completely avoid passing through the axis of rotation of the rotating helical blade.

Disclosed herein is a labyrinth seal comprising a rotatable circular cylinder having a sidewall and an axis of rotation. The cylinder is rotatably mounted in a housing with bearings disposed in a sealed chamber between the housing and the sidewall. The sealed chamber is defined between an outer surface of the cylinder and an inner surface of the housing, and axially opposed ends of the sealed chamber are formed by opposing surfaces spaced from one another defining a path. The path only extends parallel to and away from the axis of rotation as the path extends axially away from the bearings.

### BRIEF DESCRIPTION OF THE DRAWINGS

Fig. 1 is a view in perspective illustrating an apparatus embodying the preferred embodiment of the present invention.
Fig. 2 is a view in perspective illustrating a portion of the embodiment of Fig. 1.
Fig. 3 is a view in perspective illustrating a portion of the embodiment of Fig. 1.
Fig. 4 is a side view in section, through a vertical plane, illustrating the embodiment of Fig. 3.
Fig. 5 is a magnified view of Fig. 4.
Fig. 6 is a top view in perspective, through a horizontal plane, illustrating the embodiment of Fig. 3.
Fig. 7 is a view in perspective illustrating a preferred blade.
Fig. 7A is a schematic side view in section showing a view through the line A-A of Fig. 7.
Fig. 8 is a schematic view in perspective illustrating the spindle 64 with a quarter section removed to illustrate clearly the labyrinth seals.
Fig. 9 is a magnified view of the portion shown in the rectangular section marked B in Fig. 5.
Fig. 10 is a view in perspective illustrating a first component of the labyrinth seal 66.
Fig. 11 is a side view in section illustrating the component of Fig. 10 viewed in section through the line 11-11 of Fig. 10.
Fig. 12 is a view in perspective illustrating a second component of the labyrinth seal 66.
Fig. 13 is a side view in section illustrating the component of Fig. 12 viewed in section through the line 13-13 of Fig. 12.
Fig. 14 is an end view illustrating the alignment tube.
Fig. 15 is a bottom view illustrating the alignment tube.
Fig. 16 is a view in perspective illustrating the alignment tube mounted in the alignment box.
Fig. 17 is a view in perspective illustrating the alignment tube.
Fig. 18 is a section view in perspective illustrating a portion of the apparatus including the alignment tube in an on-axis position.
Fig. 19 is a section view in perspective illustrating a portion of the apparatus including the alignment tube in an off-axis position.
Fig. 20 is an end view in section illustrating the locating channel at one end of the box 50.
Fig. 21 is an end view in section illustrating the locating channel at a second, opposite end of the box 50 from that shown in Fig. 20.
Fig. 22 is a view in perspective illustrating an alternative embodiment of the blade assembly.
Fig. 23 is a view in perspective illustrating the blade assembly of Fig. 22.
Fig. 24 is a side view in section illustrating the embodiment of Fig. 23 through the line 24-24.
Fig. 25 is an exploded view in perspective illustrating the embodiment of Fig. 24.
Fig. 26 is a view in perspective illustrating the embodiment of Fig. 25 with the tool of Fig. 27 inserted therein.
Fig. 27 is a side view illustrating an embodiment of a tool used to remove the blade of the embodiment of Fig. 24 from the retainer thereof.
Fig. 28 is a side view in section showing the placement of the tool of Fig. 27 in the embodiment of Fig. 24 as shown in Fig. 26.
Fig. 29 is a schematic side view in section illustrating an alternative embodiment in which the spindle 464 is integral with the retainer of the blade assembly 460.
Fig. 30 is an end view in section illustrating an embodiment of an alignment tube in an on-axis position.
Fig. 31 is a view in perspective illustrating the embodiment of Fig. 30.
Fig. 32 is an end view in section illustrating an embodiment of an alignment tube in an off-axis position.
Fig. 33 is a view in perspective illustrating the embodiment of Fig. 32.
Fig. 34 is a schematic side view in section illustrating an alternative embodiment in which the tabs and grooves are reversed from the embodiment shown in Fig. 29.

In describing the preferred embodiment of the invention which is illustrated in the drawings, specific terminology will be resorted to for the sake of clarity. However, it is not intended that the invention be limited to the specific term so selected and it is to be understood that each specific term includes all technical equivalents which operate in a similar manner to accomplish a similar purpose. For example, the word connected or terms similar thereto are often used. They are not limited to direct connection, but include connection through other elements where such connection is recognized as being equivalent by those skilled in the art.

### DETAILED DESCRIPTION OF THE INVENTION

U.S. Patent application Serial number 63/654,512, which is the claimed priority application, is incorporated herein by reference.

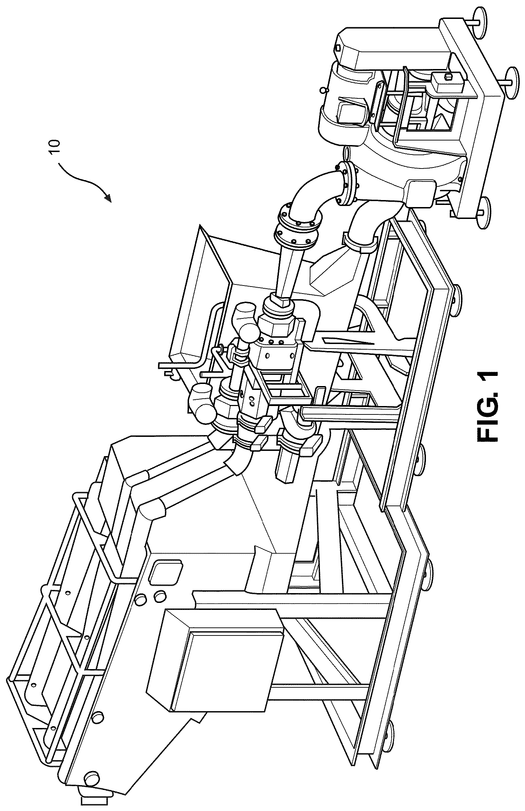

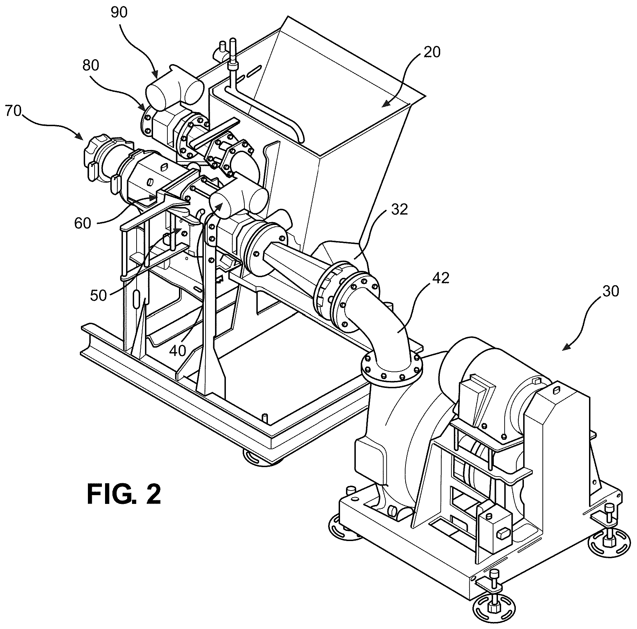

Fig. 1 shows a hydrocutting apparatus 10 used for slicing food products, such as potatoes, carrots, beets or any other food product. Potatoes may be referred to herein, but that is not to the exclusion of other food products, but as an example of food products. Fig. 2 and following may show only portions of the apparatus 10. The portions in Fig. 1 that are not described or shown in Fig. 2 and following may be known to those of ordinary skill in this field, and are therefore not described in detail.

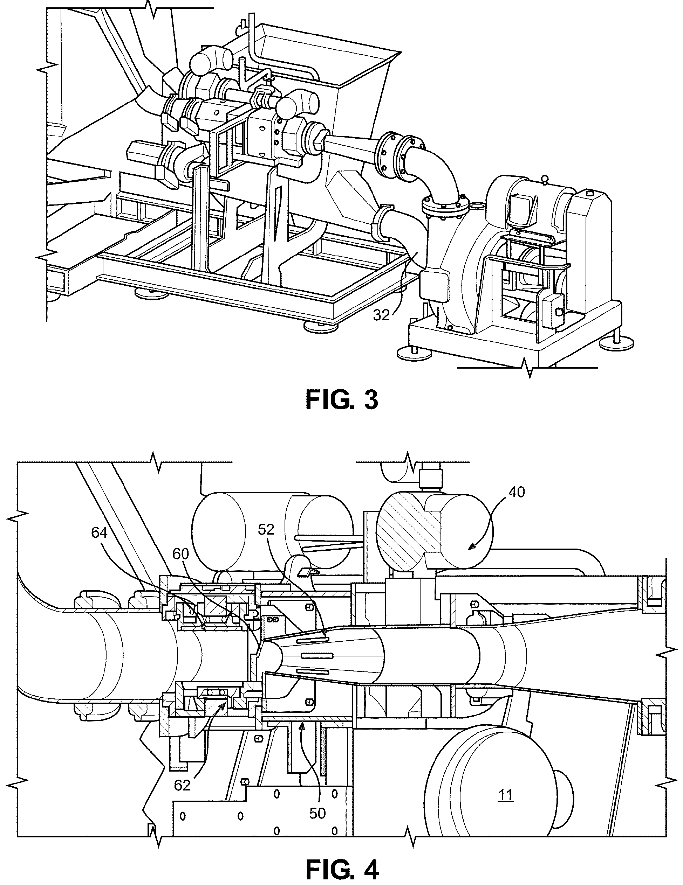

As noted above, water and food products are propelled through conventional hydrocutting systems by a pump. In the apparatus 10, a pump 30 is fluidically connected via a tube 32 to the tank 20 and by a tube 42 to the flow meter 40 similarly to a conventional hydrocutting system. Food products, such as potatoes, and water (returning from a decelerator) flow from the tank 20 to the pump 30. The pump 30 may decrease the fluid pressure on the tank 20 side and increase the fluid pressure on the flow meter 40 side, thereby propelling water and food products, such as potatoes, through the tube 42 of the apparatus 10. Downstream from the flow meter 40, and in fluid communication therewith, is a bypass/alignment box 50, inside of which is an alignment tube 52 (Fig. 4).

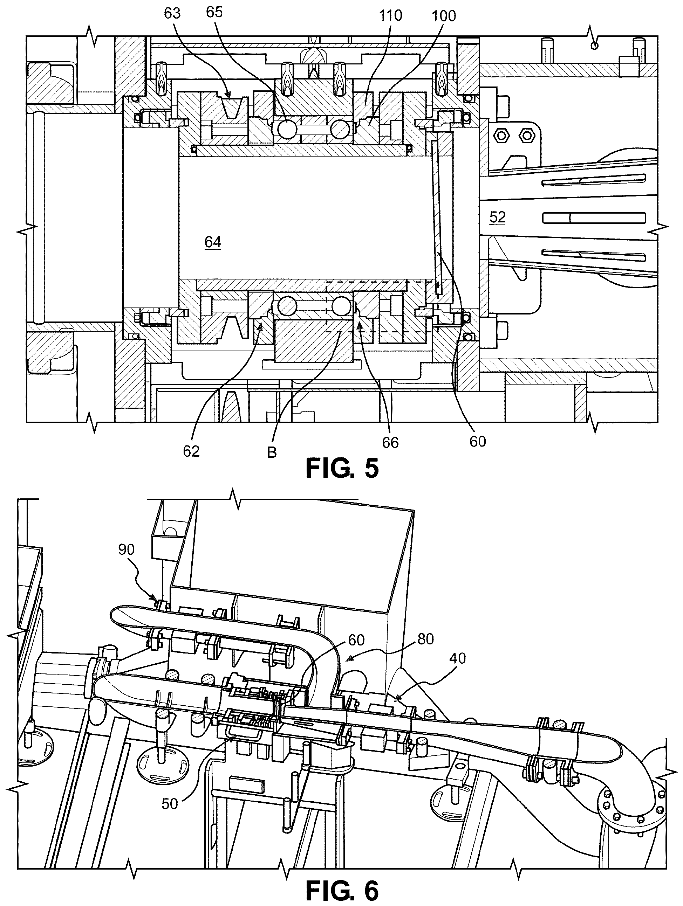

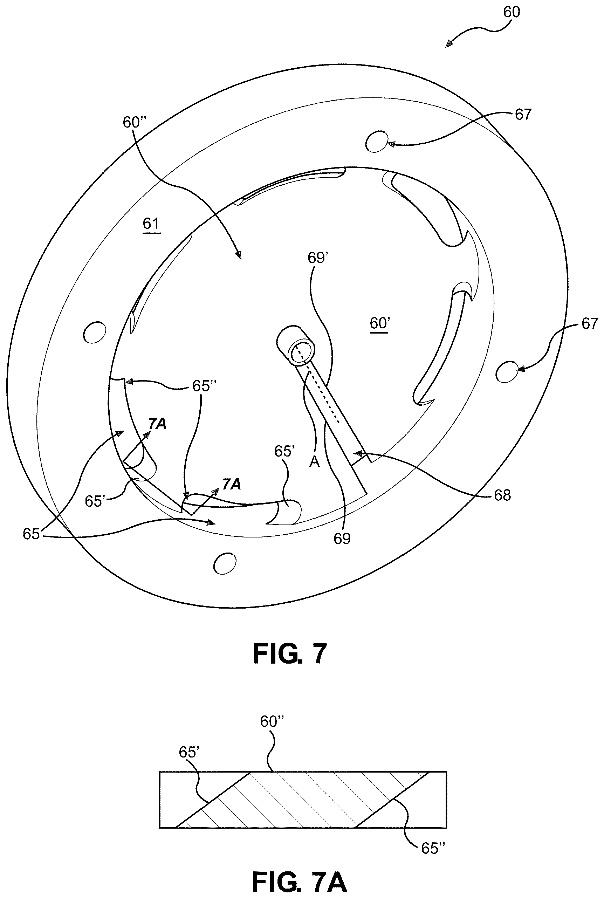

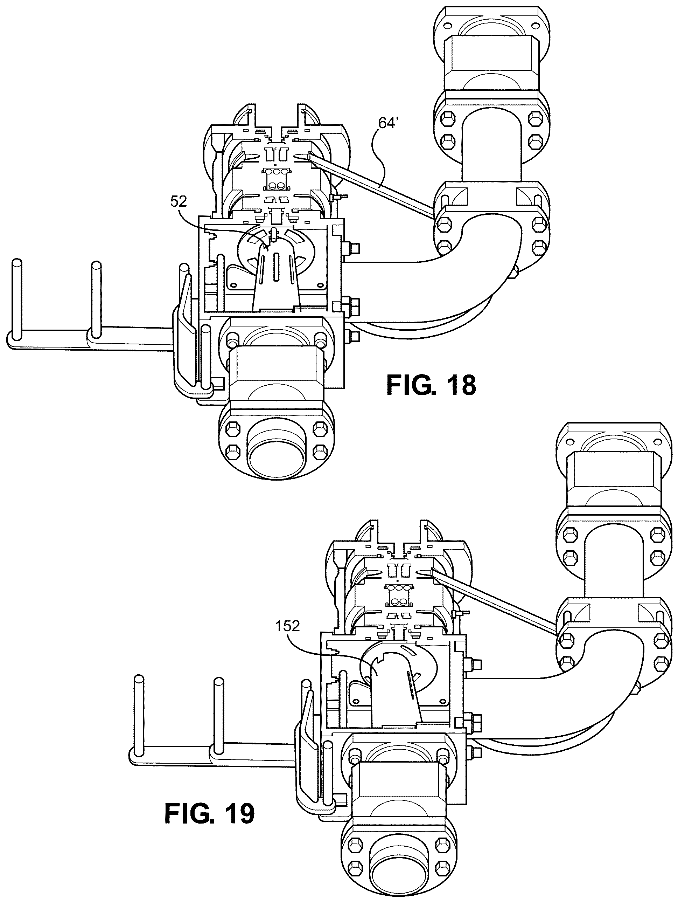

A helical cutter blade 60 may be rigidly mounted to the upstream end of, and aligned coaxially with the tubular spindle 64. The spindle 64 is a hollow barrel rotatably mounted in the apparatus 10 with conventional bearings, such as ball bearings 65 or similar. The spindle 64 may be driven by a drive linkage to a conventional motor 11 (Fig. 4), such as a belt 64' (Figs. 18-19) inserted in the circumferential V-shaped recess 63 (Fig. 5) around the sidewall of the spindle 64.When the motor is actuated, the belt 64' drives the spindle 64 in rotation, which rotates the blade 60 that is attached at one end of the spindle 64. Thus, the blade 60, which is shown in an operable position in Fig. 4 and alone in Fig. 7, is rotatably mounted in the apparatus 10 just downstream of the alignment tube 52 and drivingly linked to a motor via the spindle 64. Alternative linkages between the motor and the spindle 64 include a chain, driveshaft, gear or any equivalent drive linkage.

In some embodiments, the spindle 64 has at least one seal 62, and preferably a second seal 66, that prevents any particulate and/or water molecules in liquid form from bypassing the seal(s) 62 (and 66) and accessing the bearings 65. The spindle 64 is in fluid communication with a discharge conduit 70 that receives the sliced product and water in a conventional manner and conveys them downstream to a decelerator that enables retrieving of the sliced food product and recycling of the water to be used in another cycle by the pump 30 after passing through the tank and collecting more food products.

As shown in Figs. 4-6 and 18-19, the central axis of the alignment tube 52 and the axes of rotation of the blade 60 and spindle 64 are substantially coaxial in some embodiments. In other embodiments, the alignment tube's axis is deliberately in a position that is offset from the axes of the blade 60 and spindle 64, as described in more detail below.

During operation food product may be loaded into the product tank 20, which contains water. The pump 30 draws water and food product from the tank 20 through the tube 32 and forces the water and food product through the tube 42, the alignment tube 52, the blade 60, the interior passage of the spindle 64, and the rest of the apparatus 10. The food product, suspended in water, is first impelled by the pump 30 through the primary flow meter 40 and continues on, in the most relevant portion of this cycle, to the bypass/alignment box 50. The bypass/alignment box 50 contains the alignment tube 52, where the food product in the water singulates and aligns with the axis of the alignment tube 52.

The alignment tube 52 accelerates the food product and water toward the blade 60, and the food product impacts the downstream blade 60. When the food product reaches the blade 60, it is sliced by the blade 60 as described in more detail below. After the food product is cut into multiple pieces by the blade 60, the food product pieces, along with the water, pass through the spindle 64 and exit the bypass/alignment box 50, preferably through the product discharge 70. During or after exiting through the discharge 70, the system has conventional components that slow the speed of the water and food products and separate sliced product from the water. The sliced food pieces are retrieved and the water is guided back to the tank 20 to continue in another cycle as forced by the pump 30.

The bypass 80 allows excess water to flow downstream around the helical cutter blade 60, and the bypass flow meter 90 detects the flow rate of the water through the bypass 80. The flow meter 90 transmits a signal to a central computer (not visible), and that signal is a function of the flow rate. When the computer detects a threshold flow rate through the bypass 80, the computer may notify personnel or actuate other components to avoid damage to the system or the food product.

A more detailed explanation is now given of the various components described generally above. The blade 60 is a preferably helical cutting blade 60, shown in part in Figs. 4 to 6 and in full in Fig. 7, and is preferably a circular disk shape, although other shapes will be apparent to the person of ordinary skill from this description. The preferred blade has an annular outer frame 61 with a central plate 60' that forms the cutting edge(s). Apertures 67 are formed through the outer frame 61 through which screws or other fasteners may be extended to attach the blade 60 to the spindle 64 or any other structure. Alternatively, the outer frame 61 may be welded or integral to the spindle 64.

A radial slit 68 in the central plate 60' separates a sharp edge 69 from an opposing edge 69', which may be sharp but is preferably not sharp. The sharp edge 69 is preferably ground to a sharpness that will permit it to operate as described herein. At the radially outermost position of the central plate 60', the sharp edge 69 is disposed axially upstream from the opposing edge 69'. At the radially innermost position of the central plate 60', the sharp edge 69 is not substantially disposed axially from the opposing edge 69', although it is contemplated that this end may be disposed axially. The central portion 60' extending between the sharp edge 69 and the opposing edge 69' is curved in the shape of a helix to gradually accommodate the differences in axial position of the radially outermost portions of the central plate 60' at the slit 68.

When cutting, the blade 60 is rotated at very high speed, which may be hundreds or thousands of revolutions per minute (RPM). Examples are 2,000 RPM, 4,500 RPM and 6,000 RPM. Higher and lower speeds are contemplated. The direction of rotation is counter-clockwise in the orientation shown in Fig. 7 so that at least a portion of the sharp edge 69 is disposed more upstream and, therefore, contacts the food product first.

During operation, as the food products reaches the blade 60, the sharp edge 69 first contacts the food product and begins to insert and separate a piece from the rest of the food product. As the food product continues on its linear path downstream, the blade 60, which is tuned to the appropriate speed necessary to cut the food product moving downstream at a particular speed without substantially slowing the food product, continues slicing through the food product and forming one or more separations that form two or more pieces of the food product. Once the entire food product has passed through, and been sliced by, the blade 60, the singular food product will have been separated into two or more portions by the sharp edge 69. These portions may remain in close proximity once they progress through and exit the spindle 64, or they may separate, depending on variables, such as water speed, turbulence, portion shape and others. The slicing of food products is a process that continues as long as the operator of the apparatus 10 maintains operation and has a supply of food products.

**Off-Axis Alignment.** With the positioning of the alignment tube 52 in a first position (shown in Figs. 18, 30 and 31), by the time the product reaches the blade 60 the axial center (e.g., center of mass) of the food product is aligned with the axis of rotation A (Fig. 7) of the blade 60. In this first position of the alignment tube 52, the food product's axial center is substantially aligned with the axis of rotation A of the blade 60 by virtue of the food product flowing down the alignment tube 52, which is conically shaped and has slots on the exterior to release water as the pressure builds when the food product reaches the narrowest end. The alignment of the axis of the alignment tube 52 with the axis of rotation A of the blade 60 assures this positioning.

In this first position, the helical cutter blade 60 is rotated around the centerline of the food product flow, and when the food product reaches the blade 60 the sharp edge 69 incises the product at the same, or similar, speed as the product is moving. This thereby produces helically-shaped, also known as "spiral" or "curly," food product pieces. These food product pieces are subsequently carried through the product discharge 70, as is known in the hydrocutting industry. The location of the alignment tube 52 in this on-axis position is shown in Figs. 18, 30 and 31.

As an alternative to aligning the axial center of the food product with the axis of rotation of the blade 60, the centerline of the product flow may be offset from the rotational axis of the blade 60 to a second position. This alternative may be desirable when slicing cucumbers into pickle chips or carrots into disc-shaped pieces, or any other situation a person having ordinary skill contemplates. Whereas alignment tubes in hydrocutting applications have historically been focused on centering the product to be cut with the flow of water and emphasized positioning product at the center of a fixed set of blades as in the first position described above, a focus which the apparatus 10 may operate under as described herein, the cutting apparatus 10 can alternatively be used for more purposes due to the ability to dispose the alignment tube 52 off-axis from the axis of rotation A of the blade 60 to a second position shown in Figs. 19, 32 and 33.

By adjusting the alignment of the alignment tube 52, pickle chips may be cut from cucumbers on the same system that can cut spiralized fruits and vegetables, as an example. Many types of disk-shaped slices may be formed by such a system. This off-axis positioning of the alignment tube 152 is shown in Figs. 19, 32 and 33, and is considered a second position. The most downstream end (farthest from the viewer in Fig. 19) of the alignment tube 152 is positioned to the left of the position that the most downstream end of the alignment tube 52 maintains in Figs. 18, 30 and 31. This difference in the second position locates the center of the food product in the alignment tube 152 far enough from the axis of rotation A of the blade 60 that each entire food product may be positioned on one side of the axis of rotation A of the blade 60. This positioning ensures that the food product will not be helically cut, but instead will be sliced into disks. No parts of the food products pass through the axis of rotation A of the blade 60 in the second position. Instead, all parts of the food products pass to one side of the axis of rotation A, and the sharp edge 69 slices the food product into discrete pieces along planes substantially perpendicular to the longitudinal axis of the food product.

The off-axis alignment alternative optimizes yield and cut quality while limiting plugging. Re-directing the flow requires some specific details about the tube, holder, and system overall, to ensure proper operation, as explained in more detail below. Off-axis alignment for a helical blade, hydrocutting system provides improved flexibility for the types of food products that can be cut, and also allows for manufacturers to cut products that previously could not be cut by anything other than a mechanical cutter.

One reason that alignment tubes traditionally have been on-axis only is that to hold them off-axis is difficult. If alignment tubes are not properly held, unintentional movement may occur resulting in product/blade damage or plugs.

The disclosed apparatus allows for an offset alignment tube because of the geometry of the bypass/alignment box 50. This box 50 allows for the alignment tube 52 to be repeatedly put into an on-center position without tools, as well as holding it rotationally (i.e., preventing rotational movement of the alignment tube 52). An alignment tube that is not rotationally restrained would be dangerous in a helical blade, hydrocutting system. If the tube were to begin rotating it could end up spinning close to the speed of the blade. But the alignment tubes in helical cutters are not normally fitted with bearings or other features to handle this speed of rotation. A non-rotationally specific alignment tube would allow the alignment tube to store large amounts of kinetic energy which could damage the system and even potentially harm the operators of the system.

The disclosed apparatus incorporates a positive lock on the alignment tube to prevent the alignment tube from rotating. This is done by creating an offset matching geometry of the alignment box so the alignment tube 52 or 152 can only be inserted one way. The alignment tube is held in place in the by the tool-less door and requires no other fasteners ensuring easy, quick, and repeatable installs.

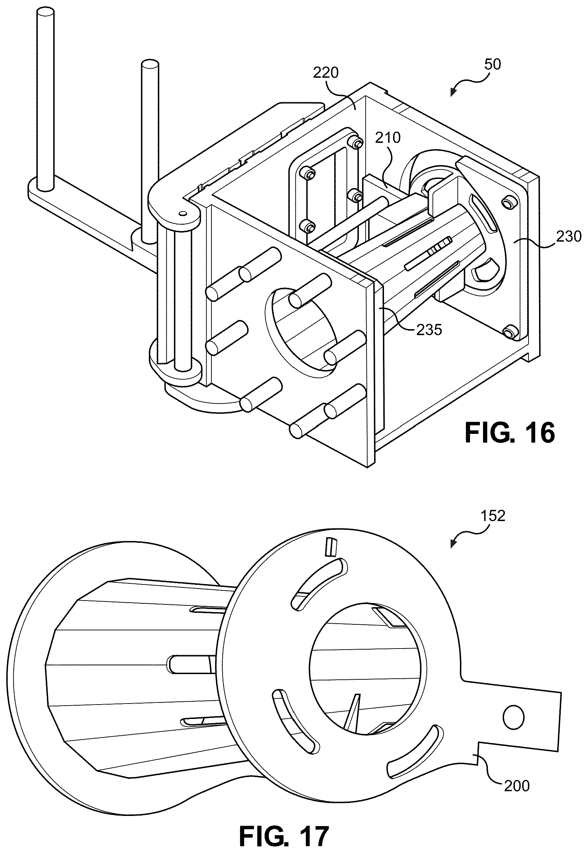

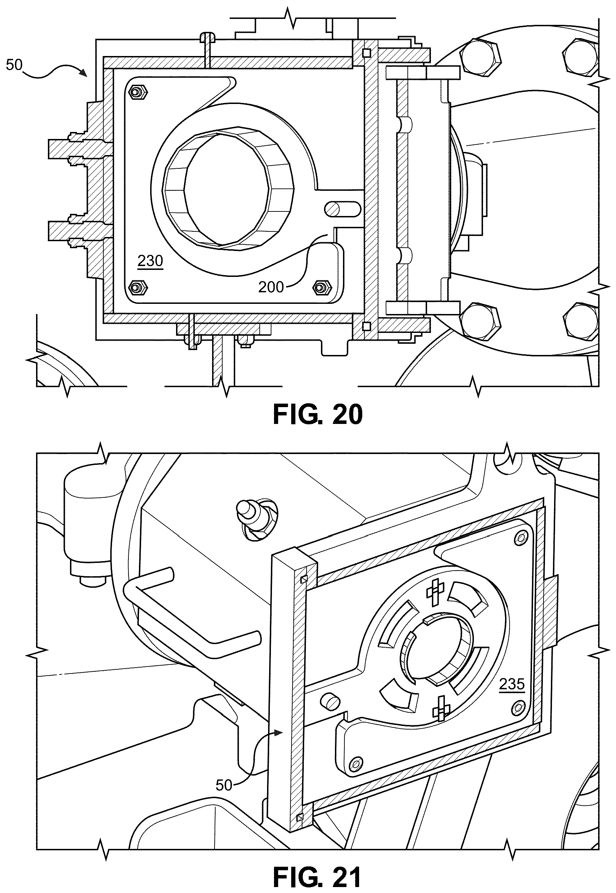

There are locating channels 235 and 230 at the infeed and discharge ends, respectively, of the bypass box 50 (see Figs. 16, 20 and 21). The ends of the alignment tube(s) 52 and 152 can be disposed in the locating channels 230 and 235 in the bypass box 50. The locating channels 230 and 235 are sized slightly differently to ensure correct orientation of the alignment tubes 52 and 152 with relation to the direction of product and water flow. The tubes only fit in the locating channels in the correct orientation. The locating channels 230 and 235 may be made from a material dissimilar to the alignment tubes 52 and 152 to prevent any galling or other similar types of corrosion.

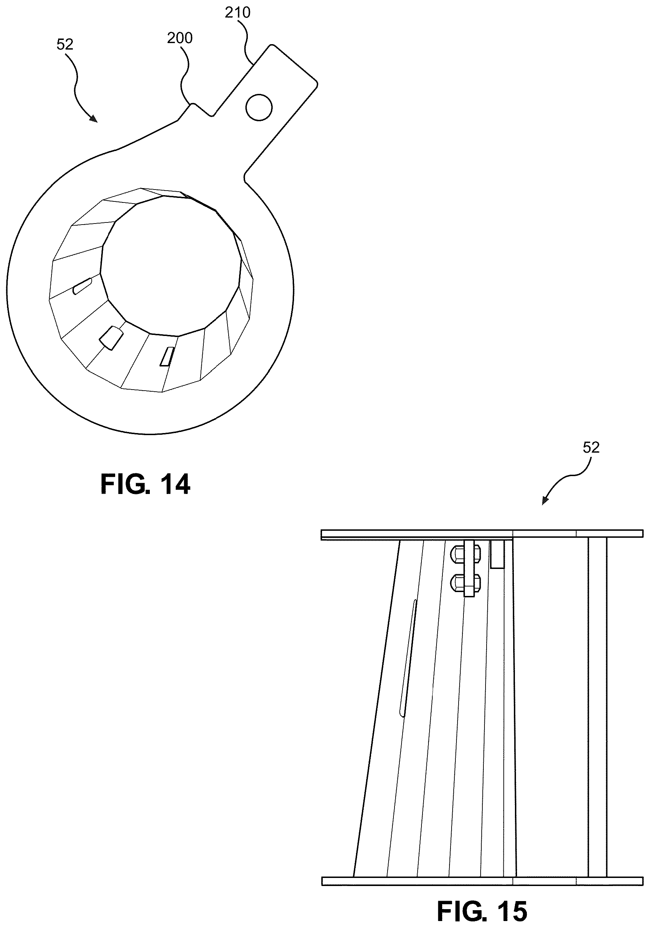

Each of the locating channels 230 and 235 wraps less than half way around the corresponding end of the alignment tube 52 and 152 when in position, meaning that less than half of the diameter of the respective alignment tube end contacts each locating channel. This allows for the locating tab 200 and handle arm 210 (see Fig. 14; shown only on tube 52, but an identical structure exists on tube 152) of the alignment tubes 52 and 152 to locate where the U-shaped locating channels 230 and 235 have a central void. With the handle arm 210 bearing against the door 220 of the bypass box 50 (Fig. 16), the alignment tube is forced into the correct position and cannot shift the axial alignment. With the locating tabs 200 at each end of the tubes bearing against the sides of the locating channels 230 and 235, the alignment tube 52 or 152 will have a degree of preload to prevent rotational shifting or motion. This ensures that when food products are being guided via the alignment tubes 52 and 152, the system is not subjected to unexpected movements or part-to-part contact.

The upstream end of the alignment tube is maintained at the same radial position whether the tube is on-axis (first position) or off-axis (second position). The downstream end of the tube is in a different position when off-axis compared to on-axis. This change of position may be due to a tube that is capable of being moved between the first position and the second position. In such an alignment tube, the downstream end must be capable of being fixed so that the tube can neither rotate nor align substantially differently. Alternatively, and preferably, the apparatus 10 has two different alignment tubes, one that is used when on-axis alignment is required, and a second that is used when off-axis alignment is required.

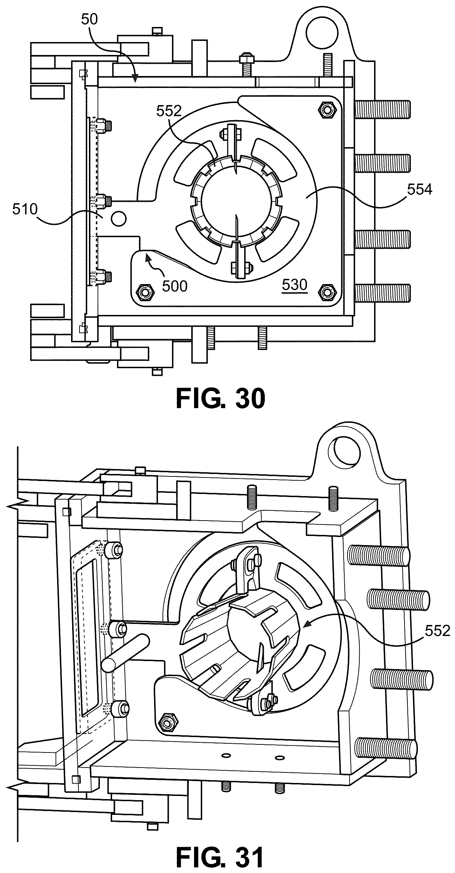

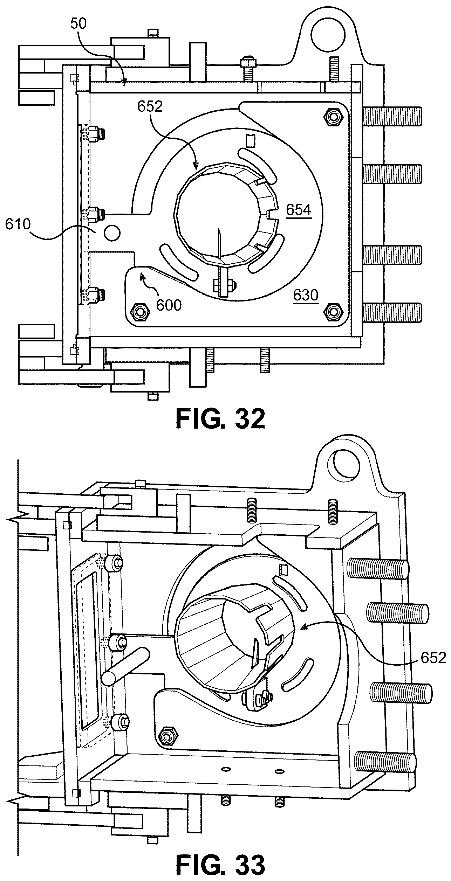

Figs. 30 and 31 show a portion of the on-axis tube (the remainder is removed for viewing the portion that is shown), and Figs. 32 and 33 show a portion of the off-axis tube (the remainder is removed for viewing the portion that is shown). The on-axis tube has a locating channel 530 that is rigidly mounted to the alignment box 50, such as by screws. The downstream end of the on-axis alignment tube 552 has a flange 554 mounted to the exterior of the tube 552, and the flange 554 rests within the locating channel 530. The flange has a locating tab 500 and a handle arm 510 that fix the downstream end of the tube 552 both to prevent rotation and lateral movement. The locating tab 500 rests against the locating channel 530 to prevent rotation of the tube 552. The handle arm 510 seats against the alignment box 50 to prevent lateral movement of the tube 552. Upon opening of the door of the alignment box, the portion of the alignment box that supports the handle arm 510 is moved, and so the tube 552 may be moved out of the locating channel 530 and removed. When the tube is in place as shown in Figs. 30 and 31, no substantial lateral (radial) or rotational movement of the tube 552 is possible.

The off-axis tube has a locating channel 630 that is rigidly mounted to the alignment box 50, such as by screws. The downstream end of the off-axis alignment tube 652 has a flange 654 mounted to the exterior of the tube 652, and the flange 654 rests within the locating channel 630. The flange may be 0.25 inches thick steel, and has a locating tab 600 and a handle arm 610 that fix the downstream end of the tube 652 both to prevent rotation and lateral movement. The locating tab 600 rests against the locating channel 630 to prevent rotation of the tube 652. The handle arm 610 seats against the alignment box 50 to prevent lateral movement of the tube 652. Upon opening of the door of the alignment box, the portion of the alignment box that supports the handle arm 610 is moved, and so the tube 652 may be moved out of the locating channel 630 and removed. When the tube is in place as shown in Figs. 32 and 33, no substantial lateral (radial) or rotational movement of the tube 652 is possible.

Thus, it is apparent that a pair of alignment tubes 552 and 652 may be used in the same alignment box, with one tube being aligned on-axis, and the other being aligned off-axis. One may replace the other by simply opening the alignment box and removing one and substituting for it the other. No tools are required for this replacement due to the need merely to open and close the alignment box. The alignment box 50 supports both tubes, alternately, against rotation and lateral movement by locating channels that receive the respective flange, and which flange has a locating tab and handle arm that are supported by the surface of the locating channel and portion of the alignment box against which they seat.

**Flow Enhancing Geometry**. The helical cutter 10 has a spinning blade 60 which is able to accommodate a volume of water through the blade 60 as the desired velocity requires. Breather ports, also referred to as slots 65, are formed through the central plate 60' near the outer edge where the central plate 60' and the outer frame 61 meet. Each of the slots 65 preferably has greater length along the circumferential direction than the radial direction, and has a non-trivial radial width. For example, for a blade 60 that is nine inches in diameter, the slots 65 may be at least about one-quarter of an inch in radial width, and preferably greater. The circumferential lengths of the slots depends on the number of slots, but the six slots 65 shown in the blade 60 may be about two to six inches long in a nine inch diameter blade 60. The example of a nine inch diameter blade does not limit in any way, and blades of larger and smaller diameters are contemplated.

The preferred blade 60 increases water flow versus the prior art blades via shaping the endwalls of the breather ports 65 through the plate 60', as shown in Fig. 7. This strategic shaping reduces the load on the bearings, improves the system cooling capacity, and reduces the chances of plugging, all while giving the capability of increasing water flow.

In a preferred embodiment, the endwalls 65' and 65" of each of the breather ports/slots 65 are angled relative to the face 60" of the central plate 60'. For example, as shown in Figs. 7 and 7A, the angled endwalls 65' and 65" are shown at less than a 90 degree angle to the face 60" of the central plate 60'. This angle may be about 45 degrees, or it may be between about 30 degrees and about 60 degrees. It is contemplated that the angles may be as little as 1 degree to as much as just under 90 degrees. This angle of the endwalls 65' and 65" may also be described in relation to the direction of water flow, which is along the axis of rotation A. The angled endwalls 65' and 65" are shown at an angle to the direction of water flow and the axis of rotation A. This angle may be about 45 degrees, or it may be between about 30 degrees and about 60 degrees. It is contemplated that the angles may be as little as about 1 degree to as much as just under 90 degrees.

The endwalls 65' and 65" may be planar (flat with no curvature), curved (as in Fig. 7) or irregularly shaped. For example, an endwall may be curved in the direction of the length of the slot 65. As an alternative, the endwall may be curved about a direction perpendicular to the length of the slot 65. Still further, an endwall may be curved about any angle between. It is also contemplated to curve the endwalls spherically, parabolically or otherwise, and curved with any technically feasible radius about any point.

The endwall 65' may have a different shape and/or angle than the endwall 65", but it is preferred that the endwalls be identical for a given slot. The endwall 65" at the opposite end of the same slot 65 is preferably formed at a similar angle to the opposing endwall 65'. This is most apparent from Fig. 7A, which is a schematic side view of the slot looking at the direction A-A. These angled endwalls 65' and 65" produce a net pressure that forces water downstream when the blade 60 is rotated counter-clockwise in the orientation shown in Fig. 7.

By sloping or angling the endwalls 65' and 65" as described herein (relative to the face 60" or to the direction of water flow), the water encounters less resistance when passing through the blade 60 and, indeed, preferably impels water downstream through the slots 65 due to the angled endwalls 65' and 65". With a gradual transition of the sloped surfaces 65' and 65" instead of the surfaces of the prior art's endwalls (which are parallel to the water flow direction), the blade's 60 breather port geometry generates more desirable flow conditions. With the structure of the preferred blade 60, there is a different interaction between the flow of water, the downstream face 65", and the upstream face 65' of the breather ports 65. The downstream face 65" of each breather port 65 improves flow by changing the direction of force applied by the blade 60 to be more in line with the direction of axial flow. This means that the sloped breather port endwalls 65' and 65" apply a more effective force to the water flowing through the blade 60, whereas the non-sloped ports in the prior art (that are substantially perpendicular to the face of the blade and substantially parallel to the direction of water flow) merely pushed the water to either side of the edges, causing backpressure and randomness to the flow. The upstream endwall 65' of each breather port 65 is preferably shaped similarly to each downstream endwall 65". The upstream face provides a smooth transition for the water flow as the water is being forced against the upstream face.

**Labyrinth Seal.** Structures that rotate at high speed must have bearings to permit high speed rotation. When such structures are in an environment where they are exposed to water and organic matter, they use sealing structures to prevent the water and organic matter from reaching the bearings. Sealing bearings from the environment takes extra care when considering food processing. Material selection, washdown compatibility, and catchpoint elimination must all be considered when selecting a structure for sealing the bearings.

A labyrinth seal is a type of mechanical seal that provides a tortuous path to help prevent leakage. Labyrinth seals on rotating structures provide non-contact sealing action by controlling the passage of fluid through a variety of chambers. A new labyrinth seal is disclosed herein that provides many advantages and sets the preload on both the inner and outer races of the associated bearings. Furthermore, for this specific application, stainless steel is used as the seal component to ensure that it is food contact safe while ensuring a long bearing life that is free of foreign objects and dust. The disclosed structure forms a labyrinth seal with no reversing channels, which eliminates catch points for water or other material. This is also structural, inasmuch as the seal sets the preload of both the inner and outer bearing races. Reducing the need for an additional part to hold the preload on the bearings further reduces hardware, which improves food sanitation.

The disclosed apparatus comprises a non-reversing labyrinth seal. The geometry of the seal has been calculated to evacuate water density particles from the seals at all speeds over 1,000RPM. This geometry can be modified for larger or smaller bearing setups to maintain performance for particles of different densities. This permits the manufacturer to determine the materials that the labyrinth seal is made of, so that a food safe material like stainless steel may be used. However, one will recognize that any material could be used that would be dimensionally stable when considering the rotation and preload forces on the seal.

As shown in Figs. 4 to 5, the spindle 64 is mounted in the apparatus with bearings, such as spherical (ball) bearings 65, aligned around the exterior of the sidewall of the spindle 64, such as in a race as is known by those skilled in the field. These bearings permit the spindle 64 to rotate smoothly, and within particular tolerances, relative to the housing structure in which it is mounted. At least one set of structures that form the seal 62 extends circumferentially around the spindle 64 to prevent the passage of particulates and water in liquid form past the seal 62 to the bearings 65. Preferably, there is another set of structures that define another seal 66, so that there are preferably oppositely-facing seals 62 and 66.

Each of the seals 62 and 66 is defined by a complementary pair of annular structures, one of which has a substantially radially outwardly-facing surface and one of which has a substantially radially inwardly-facing surface. These two facing surfaces are spaced from one another a defined distance that is maintained substantially the same while the spindle 64 is rotating. The annular structures that define the seals 62 and 66 thus form circumferential, annular paths between the surfaces of the annular structures. These paths are the gaps defined by the spaced surfaces. It is preferred that the paths extend away from, or parallel to, the axis of rotation as the paths progress away from the area to be sealed (e.g., the bearing races). Thus, water may not enter the sealed area where the bearings 65 are housed. Instead, the water has a tendency to flow out and away from the bearings due to centrifugal force of the rotation of the spindle 64. As noted, as the paths formed in the seals progress away from the area to be sealed, each path is either parallel to the axis of rotation or angled radially away from the axis of rotation, thereby resulting in the centrifugal force tending to force the water away from the axis of rotation, away from the bearings 65, and out of the seal. The paths never extend radially toward the axis of rotation as they progress axially away from the area to be sealed.

The advantage of the surfaces that define the seals 62 and 66 is that they form deliberately shaped passages therebetween that result in the rotation of the spindle 64 evacuating water and other particles away from the bearings during operation. That is, when the spindle 64 is rotating at operational speed, centrifugal force causes any fluent material that may enter the gaps in the seals 62 and 66 to flow away from the bearings. This is due to the shape of the paths formed by the facing structures that define the seals and the rotational speed of the spindle 64. The rotational speed is sufficient to cause the centrifugal force to operate as described. Of course, in larger or smaller structures, or structures with different sized gaps or varying viscosity of fluids, the person of ordinary skill will understand how to modify the parameters to maintain this advantageous cooperation of components.

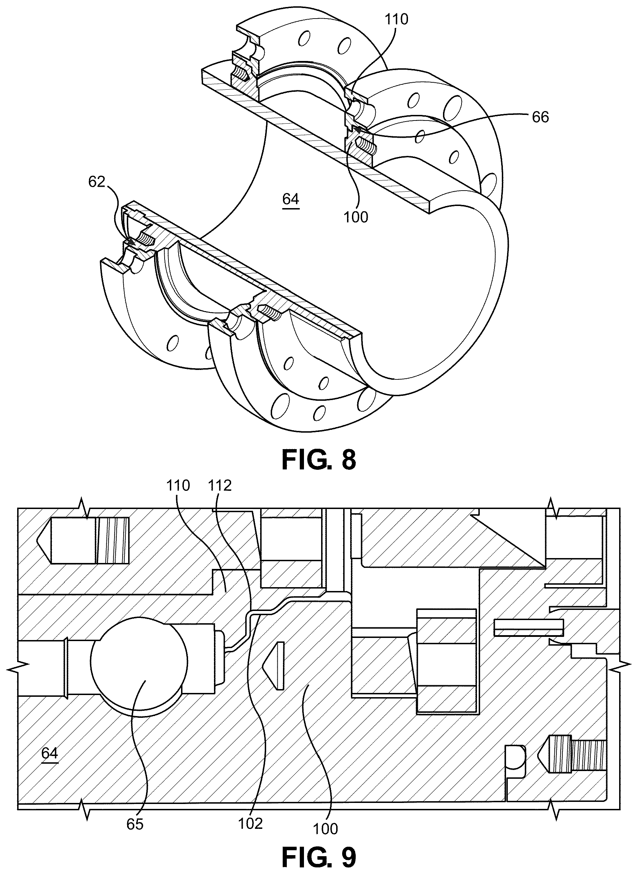

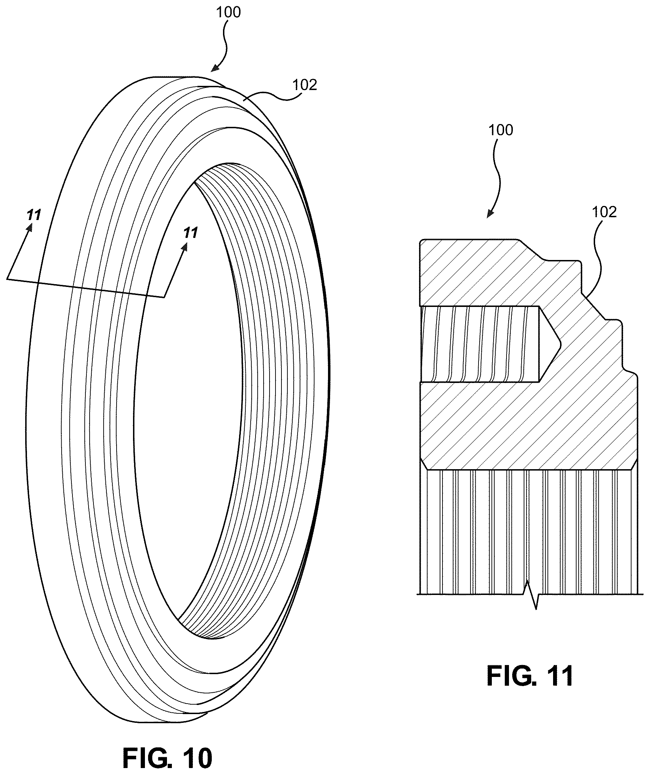

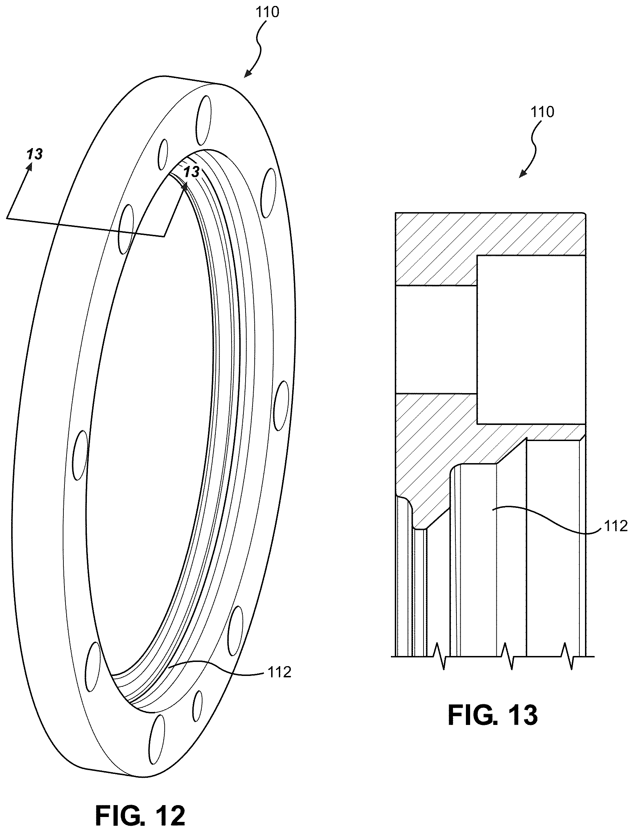

An embodiment of one pair of structures making up a seal is found in Figs. 8-13, and these are the structures used to form the seal 66, which is described herein. The seal 62 is made of virtually identical structures in a similar cooperating relation and is not described in detail due to the similarities. The ring 100 has a substantially radially outwardly-facing surface 102, and the ring 110 has a substantially radially inwardly-facing surface 112. The surfaces 102 and 112 are positioned very close to the other (e.g., 0.005-0.02 inch) in an operable position, as shown in Figs. 5 and 9, and aligned precisely coaxially so that gases may pass through the path therebetween, but during operation liquid water and particulate matter cannot reach the bearings due to path shape and centrifugal force. In Fig. 9, the axis of rotation of the spindle 64 is below the portion shown. Thus, any water entering the path between the surfaces 102 and 112 will tend to move to the right in Fig. 9, which is away from the bearing 65, because it is radially outwardly. The centrifugal force due to the rotation of the spindle 64 causes any particles to move radially away from the axis of rotation. Because the surfaces 102 and 112 define a path axially away from the bearings that may be angled away from the axis of rotation and possibly parallel thereto (but never angled toward the axis of rotation), water and particles will tend not to become trapped but will work their way out of the paths angled away from the axis of rotation.

The spindle 64 rotates with the bearings 65 supporting the rotational movement, and the seals 62 and 66 maintain the very tight gap without any of the surfaces (e.g., 102 and 112) of the seal 66 (and corresponding surfaces of the seal 62) making contact with one another. During rotation of the spindle 64, the centrifugal force of the rotation of the spindle 64 causes matter to be projected away from the axis of rotation of the spindle 64.

Because of the shapes of the surfaces 102 and 112, a path is defined therebetween that permits liquid water to be urged away from the bearings 65, due to the angling away from the axis of rotation of the spindle 64 as the path progresses axially away from the bearings. The surfaces 102 and 112 define paths that only extend radially away from, or parallel to, the axis of rotation progressing away from the area to be sealed (e.g., where the bearings are located). Centrifugal force will cause water to go away from the axis of rotation, so the apparatus provides a path out that never angles toward, only away and parallel to, the axis of rotation.

**Blade removal without tools.** As described above, the blade 60 may be mounted to the spindle 64 by screws or other fasteners, and requires tools to be changed due to dullness, damage, scheduled maintenance, or any other reason. Described herein is an alternative structure for affixing a helical cutting blade to a spindle that may not require tools for removal, depending on the parameters.

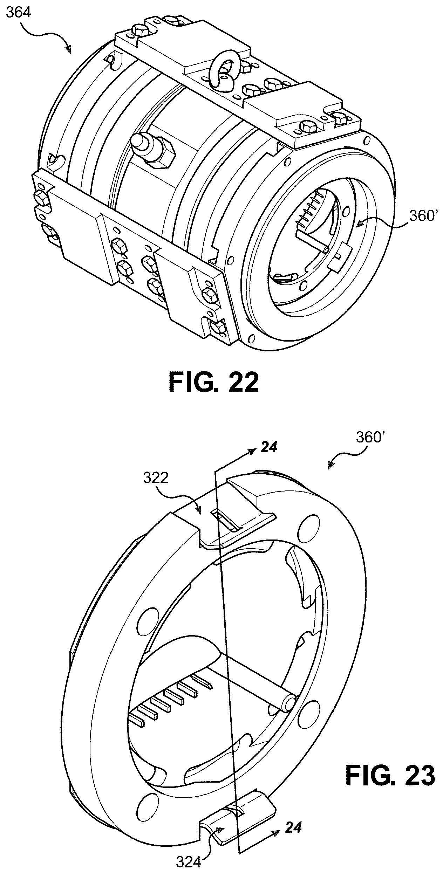

Figs. 22-28 disclose an embodiment in which a spindle 364, which is similar to the spindle 64, includes a blade assembly 360' mounted near one end. This mounting location is similar to the mounting location of the blade 60 on the spindle 64 in the embodiment of Fig. 5. The blade assembly 360' has a retainer 320, which may be affixed to the spindle 364 using bolts or other conventional fasteners through apertures 367 formed through an annulus 326. Other fasteners may be used to attach the retainer 330 to the spindle 364, or the annulus 326 may be welded or integral to the spindle 64. In the case of the annulus 326 being integral, the tabs (described below) protrude from the spindle 364. The retainer 320 is preferably made of spring steel (e.g., stainless) or other stiff and elastic material.

The annulus 326 has a central opening 328 and at least one tab 322 protrudes from the annulus 326 transversely from the plane that contains the annulus 326. Preferably a second tab 324 protrudes similarly from the annulus 326 from a position opposite the tab 322 across the opening 328. A two-tab configuration is shown in Figs. 23-28 in which the tab 322 is at about a 12 o'clock position on the annulus 326 in the orientation shown, and the tab 324 is at about a 6 o'clock position. Any number of tabs may be used, as will be understood by the person of ordinary skill from this disclosure, and the tabs are preferably evenly distributed around the opening 328.

The blade assembly 360' also has a blade 330 that is similar to the blade 60 inasmuch as the blade 330 has an annular outer frame 361 with an attached central plate 360' that forms the cutting structure(s). The central plate 360' is curved in the shape of a helix and is similar to the central plate 60' except where differences are noted.

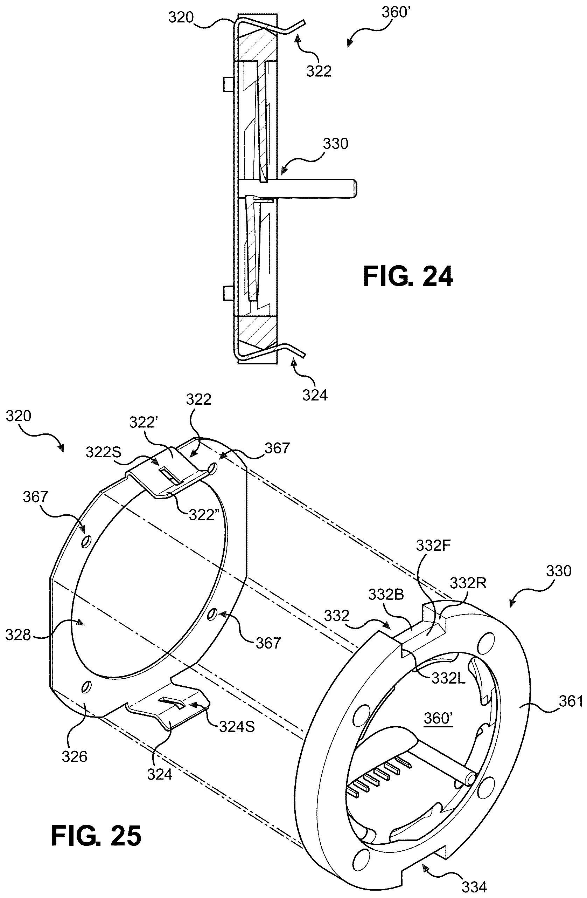

The tabs 322 and 324 extend from the annulus 326 in a manner that corresponds to the shapes of the grooves 332 and 334 formed on the blade's 330 annular outer frame 361, into which the tabs 322 and 324 extend during operation. The grooves 332 and 334 are preferably the same shape and size as each other when the tabs 322 and 324 are substantially the same shape and size as each other, so that either tab may be placed into either groove. The grooves are defined by sidewalls and facets, as described below, against which the tabs 322 and 324 may seat in an operable configuration as shown in Figs. 23 and 24.

The tab 322 and the groove 332 are described in detail herein, and it will be understood that the tab 324 and the groove 334 are preferably substantially similar thereto. This is due to the tabs 322 and 324 preferably being substantially identical to one another and the grooves 332 and 334 preferably being substantially identical to one another so that either tab may be inserted into either groove interchangeably. The groove 332 is shown in Fig. 25 having a left sidewall 332L, a right sidewall 332R, a front facet 332F, and a back facet 332B. In a preferred embodiment, the left sidewall 332L and the right sidewall 332R are substantially planar and substantially parallel to one another, and the front facet 332F and back facet 332B are at an angle of about 100-120 degrees. These angles may be modified, as will be understood by one of ordinary skill. The angle between the facets 332F and 332B produces desirable insertion of, and contact with, the tab portions, as described below.

The tab 322 has a first portion 322' connected to the annulus 326, and a second portion 322" connected to the first portion 322'. The first and second portions are angled relative to one another in the range of 100-120 degrees to correspond to a similar angle between the facets 332F and 332B. This permits the tabs 322 and 324 to be inserted into the grooves 332 and 334, respectively, as shown in Figs. 23 and 24, whereby the tab's 322 first portion 322' contacts the front facet 332F (and the tab's 324 corresponding first portion contacts the groove's 334 corresponding front facet) to frictionally engage the same. During insertion of the tabs in the grooves, the angled second portions contact the back facets and spread the tabs radially outward due to the respective angled faces contacting and axial force being applied. Because the tabs 322 and 324 are made of elastic material with significant spring constant, such as spring steel, the tabs 322 and 324 are able to be bent radially outwardly to insert the tabs 322 and 324 into the grooves 332 and 334, respectively, as shown in Fig. 24. However, during operation, the rotation of the blade 330 on the spindle 364 is not sufficient to bend the tabs 322 and 324 outwardly to effect removal of the blade 330 from the retainer 320. Instead, only deliberate bending of the tabs outwardly is sufficient to permit removal. Thus, the frictional engagement of the tabs 322 and 324 with the facet 332F (and corresponding facet in the groove 334) retains the tabs 322 and 324 in the grooves 332 and 334, respectively, until the tabs are deliberately bent outward.

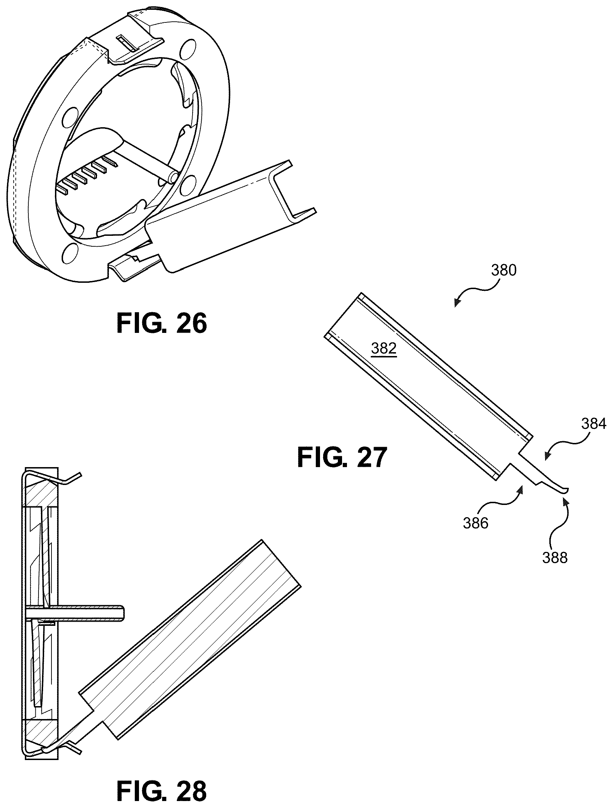

Because the tabs 322 and 324 are elastic, and desirably have substantially high spring constant resulting in being a stiff spring, the force required to bend the tabs outwardly is considerable. In some embodiments, the force required may be exerted by an average person with his fingers. In some embodiments, the force required may be exerted by a strong person with his fingers. In some embodiments, the force required may only be exerted by a person using a tool, such as is shown in Figs. 26-28. The tool 380 is shown in Fig. 27 having a handle 382 with an extension 384 that includes a slim finger 386 having a curved tip 388.

The tool 380 is used as shown in Figs. 26 and 28 by holding the handle 382 in the hand of a human operator, and directing the extension 384 toward the tab. The finger 386 is inserted into the corresponding slot (the slots are given reference numerals 322S and 324S in Fig. 25) as shown in Figs. 26 and 28, and the finger 388 is extended beyond the back facet of the respective groove. Then the tab is bent away from the blade 330 by radially outward movement of the handle, and the tool is pulled axially so that the blade 330 separates from the retainer 320 due to the finger 388 "hooking" the blade 330.

In operation, the tabs 322 and 324 extend from the annulus 326 (or the spindle 364 when integral) at an angle of about 90 degrees or less, and seat against the front facets as shown in Fig. 24, to retain the blade 330 in the retainer 320. To remove the blade 330 from the retainer 320, at least one of the tabs 322 and 324 must be bent radially outwardly past the front facet and then the blade 330 must be pulled axially away from the retainer 320. The facets of the blade 330 where the tabs 322 and 324 seat are farther apart than the gap between the closest portions of the tabs 322 and 324 when relaxed. This cooperation in size holds the blade 330 between the tabs 322 and 324 and requires the tabs to deflect away and create a larger gap for the blade 330 to be removed from the retainer 320, which is attached to, or integral with, the spindle 364. This bending of the tabs 322 and/or 324 is what permits removal of the blade 330 from the spindle 364.

In order for rotation of the spindle 364 to ensure rotation of the blade 330, the rotational movement of the blade 330 must be locked to the spindle 364. The bolts holding the retainer 320 to the spindle 364, or the integration with the spindle 364, ensure that the retainer 320 moves with the spindle 364. To ensure the blade 330 and the retainer 320 rotate together, a relief (such as the grooves 332 and 334) is formed on the blade that matches the geometry of each of the tabs on the retainer, and the retainer tabs are sized such that a corresponding relief can be made on the blade. This requires the tabs to be designed to have a compatible dimension with the blade, cutter, and other system equipment nearby. Fig. 25 shows grooves 332 and 334 in the blade 330 formed by removing material. As an alternative, other embodiments of a relief may involve adding material to the blade. Furthermore, the grooves 332 and 334 are preferably slightly wider than the width of the tabs 322 and 324. However, the grooves may be substantially wider than the tabs.

To assist with install of a blade to the retainer, the grooves 332 and 334 may be shaped with an angle on the infeed and discharge faces of the blade as shown in Figs. 24 and 25. Additionally, the tabs on the retainer may include a bend to create an outwardly angled face with respect to the centerline of the cutter as shown in Figs. 24 and 25. These angles on the blade and retainer are tuned to the elasticity of the material used for the retainer and hardness of the material of the blade. Once sized appropriately, as illustrated in Fig. 23, an operator of the equipment can install and remove the blade without the use of tools unless the use of a tool is desired.

In some applications the elasticity of the retainer may be such that removal of the blade requires assistance to meet some operational regulations for force applied by an operator. For these situations, a removal device may be provided. To ensure operation of the removal device notches 322S and 324S may be added to the tab(s) on the retainer shown in Fig. 25. The notches are sized to allow for the insertion of the removal device (Fig. 27). The removal device may be made of stainless sheet metal or another rigid material. It is shaped such that it can get a purchase on a face that is angled towards the discharge side of the blade when inserted to the notch in the tab of the retainer. Using principals of leverage, when the removal device is moved towards being parallel with the centerline of the cutter, the retainer is opened while the blade is moved away from the spindle. This allows a much lower user-applied force to remove the blade from the cutter.

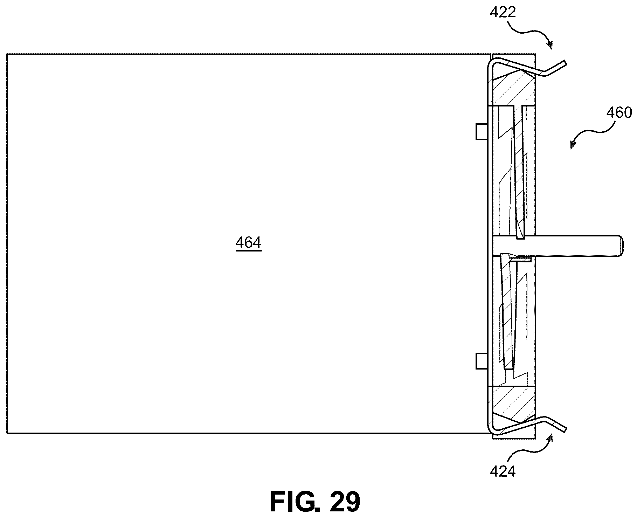

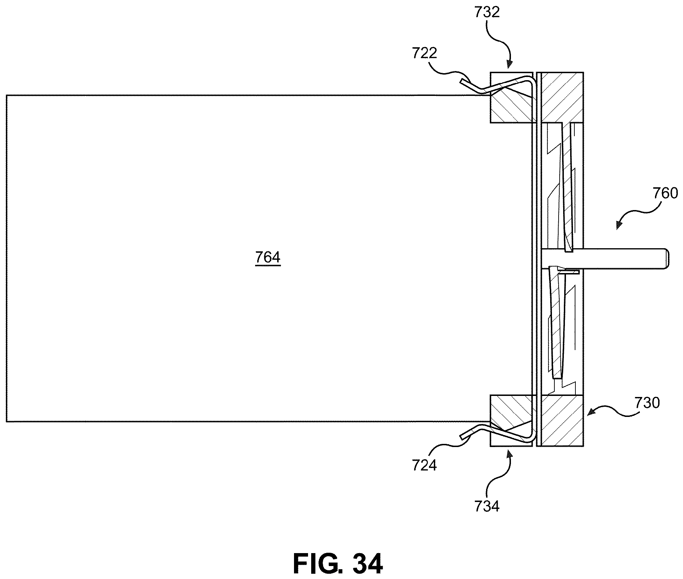

It will be understood by the person having ordinary skill from the description above that the orientation of the tabs and the grooves may be reversed from the preferred orientation disclosed above. That is, one or more tabs may extend from the blade to the spindle, and the spindle (or an annular ring attached thereto) may have grooves formed therein to receive the tabs. In a schematic illustration of an alternative embodiment, Fig. 34 shows a blade assembly 760 in which a retainer 720 is mounted to a blade 730 with tabs 722 and 724 extending downstream into grooves 732 and 734 formed in the upstream end of the spindle 764. Thus the embodiment of Fig. 29 is reversed, with the tabs extending downstream from the blade and inserting into grooves formed on the spindle.

This detailed description in connection with the drawings is intended principally as a description of the presently preferred embodiments of the invention, and is not intended to represent the only form in which the present invention may be constructed or utilized. The description sets forth the designs, functions, means, and methods of implementing the invention in connection with the illustrated embodiments. It is to be understood, however, that the same or equivalent functions and features may be accomplished by different embodiments that are also intended to be encompassed within the spirit and scope of the invention and that various modifications may be adopted without departing from the invention or scope of the following claims.

## Claims

1. A cutting apparatus in which a food product and water are forced in a downstream direction through an alignment tube into a blade, the apparatus comprising:
(a) a rotatable spindle having a central passage defined by a sidewall;
(b) the alignment tube disposed upstream of an upstream end of the spindle; and
(c) a helical blade having an axis of rotation, wherein the blade is drivingly linked to the spindle between the spindle and the alignment tube, wherein the spindle rotates the helical blade and food products forced through the alignment tube are projected into the rotating helical blade and sliced thereby.

2. The cutting apparatus in accordance with claim 1, wherein the blade is attached to an upstream end of the spindle.

3. The cutting apparatus in accordance with claim 2, wherein at least one tab extends between the upstream end of the spindle and the blade to removably fasten the blade to the spindle.

4. The cutting apparatus in accordance with claim 3, wherein the at least one tab extends downstream from the blade and removably fastens to the upstream end of the spindle.

5. The cutting apparatus in accordance with claim 3, wherein the at least one tab extends upstream from the upstream end of the spindle and removably fastens to the blade.

6. The cutting apparatus in accordance with claim 1, further comprising a retainer with at least two tabs protruding upstream from an annulus that is attached to an upstream end of the spindle, wherein the tabs insert into respective grooves formed in the blade to retain the blade and drivingly link thereto.

7. The cutting apparatus in accordance with claim 1, wherein the blade has a plurality of ports extending therethrough, each port having at least one endwall that is disposed substantially transverse to the axis of rotation.

8. The cutting apparatus in accordance with claim 7, wherein opposing endwalls in the ports are substantially parallel to one another.

9. The cutting apparatus in accordance with claim 8, wherein the endwalls are angled relative to the axis of rotation between about 30 and 60 degrees.

10. The cutting apparatus in accordance with claim 1, wherein the spindle is rotatably mounted in a housing with bearings disposed in a sealed chamber, the sealed chamber defined between an outer surface of the spindle and an inner surface of the housing, wherein axially opposed ends of the sealed chamber are formed by opposing surfaces spaced from one another defining a path, wherein the path only extends parallel to and away from the axis of rotation as the path extends axially away from the bearings.

11. The cutting apparatus in accordance with claim 1, wherein the alignment tube is configured with a downstream end that may be fixed in a first position in which food products forced through the alignment tube are projected into the rotating helical blade substantially aligned with the axis of rotation, and alternatively a second position in which food products forced through the alignment tube are projected into the rotating helical blade substantially misaligned with the axis of rotation.

12. The cutting apparatus in accordance with claim 11, wherein the food products forced through the alignment tube in the second position completely avoid passing through the axis of rotation of the rotating helical blade.

13. A labyrinth seal comprising a rotatable circular cylinder having a sidewall and an axis of rotation, the cylinder rotatably mounted in a housing with bearings disposed in a sealed chamber between the housing and the sidewall, wherein the sealed chamber is defined between an outer surface of the cylinder and an inner surface of the housing, wherein axially opposed ends of the sealed chamber are formed by opposing surfaces spaced from one another defining a path, wherein the path only extends parallel to and away from the axis of rotation as the path extends axially away from the bearings.
